# EUROPEAN PATENT APPLICATION

(11) **EP 4 794 319 A1**
(43) Date of publication of application: **19.08.2026**
(21) Application number: 25197793.0
(22) Date of filing: 25.08.2025
(51) Int. Cl.: H04N 1/00, G03G 15/00, G06F 3/0481, H04N 1/32

(54) **INFORMATION PROCESSING APPARATUS**

(30) Priority: 18.02.2025 JP 2025024507; 25.03.2025 JP 2025050661; 25.03.2025 JP 2025050774; 26.03.2025 JP 2025052318
(71) Applicant: FUJIFILM Business Innovation Corp., Minato-ku Tokyo (JP)
(72) Inventor: YOKOHASHI, Mami, Yokohama-shi, Kanagawa (JP); MATSUGUMA, Chihiro, Yokohama-shi, Kanagawa (JP); SAKAMOTO, Masaomi, Yokohama-shi, Kanagawa (JP); MATSUO, Kota, Yokohama-shi, Kanagawa (JP); HORIKAWA, Kazuhiko, Yokohama-shi, Kanagawa (JP)
(74) Representative: Becker Kurig & Partner Patentanwälte mbB

(57) **Abstract**

An information processing apparatus includes a processor configured to execute a control of displaying pseudo progress status related to measurement of a recording medium by a medium measuring device regardless of actual progress of measurement of the recording medium by the medium measuring device, and a control of displaying, then, progress status in accordance with actual measurement status of the medium measuring device.

## Description

### BACKGROUND OF THE INVENTION

### (i) Field of the Invention

The present invention relates to an information processing apparatus.

### (ii) Description of Related Art

JP2010-73014A discloses an information processing apparatus that executes predetermined processing configured with a plurality of steps on a file, and includes creation means for creating an independent progress bar for each step, and drawing means for drawing the progress bar created by the creation means on a screen, in which the drawing means draws the progress bars of different steps to be arranged in a predetermined direction.

### SUMMARY OF THE INVENTION

In a medium measuring device that measures a physical property of a recording medium, a measuring time may change depending on the measured physical property of the recording medium. Thus, depending on how progress status of the measurement is displayed, a user may misunderstand that an abnormality has occurred during the measurement.

An object of the present invention is to display a progress while reducing misunderstanding of a user.

According to a first aspect of the present disclosure, there is provided an information processing apparatus including a processor configured to execute a control of displaying pseudo progress status related to measurement of a recording medium by a medium measuring device regardless of actual progress of measurement of the recording medium by the medium measuring device, and a control of displaying, then, progress status in accordance with actual measurement status of the medium measuring device.

According to a second aspect of the present disclosure, in the information processing apparatus according to the first aspect, in the display of the pseudo progress status, items determined based on a measurement value output from the medium measuring device may be displayed in a highlighted manner in order.

According to a third aspect of the present disclosure, in the information processing apparatus according to the second aspect, the items determined based on the measurement value may be information related to a characteristic of the recording medium.

According to a fourth aspect of the present disclosure, in the information processing apparatus according to the second or third aspect, the items determined based on the measurement value may be items of control information for controlling image forming on the recording medium.

According to a fifth aspect of the present disclosure, in the information processing apparatus according to any one of the first to fourth aspects, in the progress status displayed in accordance with the actual measurement status of the medium measuring device, a predetermined item may be displayed in a highlighted manner in accordance with the actual measurement status after the pseudo progress status is displayed.

According to a sixth aspect of the present disclosure, in the information processing apparatus according to the fifth aspect, in the highlighted display of the predetermined item, a pseudo display showing that processing related to the item is being performed may be displayed.

According to the first aspect of the present disclosure, progress can be displayed while reducing occurrence of misunderstanding of a user.

According to the second aspect of the present disclosure, notification of information output from the medium measuring device can be provided.

According to the third aspect of the present disclosure, input work of the characteristic of the recording medium by the user can be easily performed.

According to the fourth aspect of the present disclosure, input work of a printing setting by the user can be easily performed.

According to the fifth aspect of the present disclosure, a display time can be reduced, compared to a case where the pseudo display is displayed regardless of an actual measurement time.

According to the sixth aspect of the present disclosure, the user can feel secure.

### BRIEF DESCRIPTION OF THE DRAWINGS

Exemplary embodiment(s) of the present invention will be described in detail based on the following figures, wherein:
FIG. 1 is a diagram for describing an information group creation system of a medium to which the present exemplary embodiment is applied;
FIG. 2 is a block diagram illustrating an example of a hardware configuration of a control unit of a printing apparatus and an example of a hardware configuration of a server apparatus;
FIG. 3 is a block diagram illustrating an example of a hardware configuration of a medium measuring device;
FIG. 4 is a block diagram illustrating an example of a functional configuration of the server apparatus;
FIG. 5 is a diagram for describing an example of a flow of calculating characteristic information of a recording medium and a printing parameter from measurement values measured by a sensor unit and an environment sensor;
FIG. 6 is a diagram illustrating an example of processing in a case where a new medium information group is created using the medium measuring device;
FIG. 7 is a flowchart illustrating an example of a flow of controlling display of a progress screen;
FIG. 8 is a diagram illustrating an example of a list display screen for displaying a standard list and a medium characteristic list;
FIG. 9 is a diagram illustrating an example of a medium characteristic input screen displayed creating a new medium information group;
FIG. 10 is a diagram illustrating an example of the progress screen displayed in a case where the medium measuring device measures the recording medium;
FIG. 11 is a diagram illustrating an example of the progress screen in a case where calculation is finished;
FIG. 12 is a diagram illustrating an example of a result screen showing a measurement result of the medium measuring device;
FIG. 13 is a diagram illustrating an example of a printing parameter input screen;
FIG. 14 is a flowchart illustrating an example of a flow of update and registration processing of updating a registered medium information group; and
FIG. 15 is a diagram illustrating an example of the result screen in a case where measurement is performed by the medium measuring device in performing update and registration.

### DETAILED DESCRIPTION OF THE INVENTION

Hereinafter, an exemplary embodiment of the present invention will be described in detail with reference to the accompanying drawings.

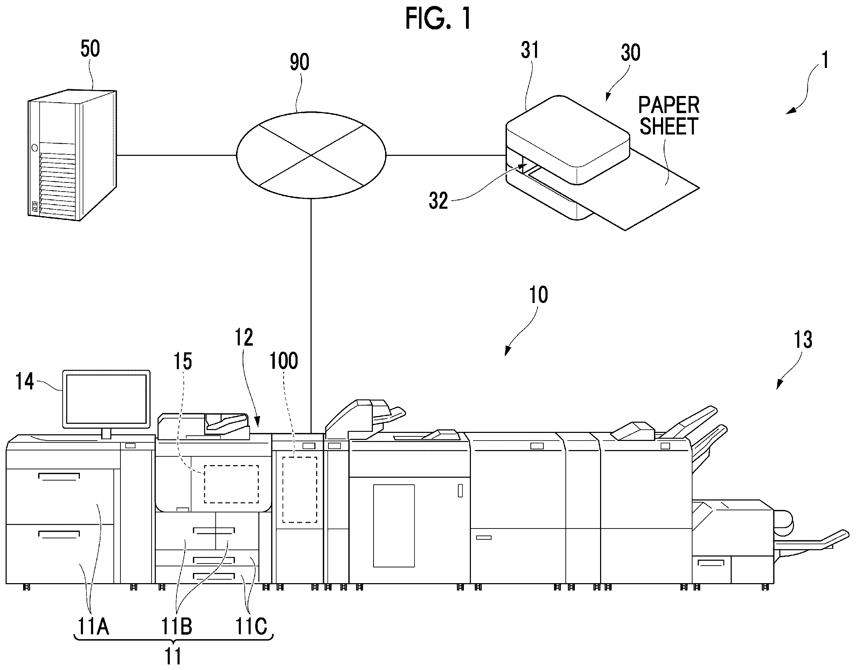

FIG. 1 is a diagram for describing an information group creation system 1 of a medium to which the present exemplary embodiment is applied.

The information group creation system 1 of a medium according to the present exemplary embodiment includes a printing apparatus 10, a medium measuring device 30, and a server apparatus 50. The printing apparatus 10, the medium measuring device 30, and the server apparatus 50 are connected via a network 90.

Here, a medium information group is information in which a characteristic of a recording medium and a printing parameter for controlling printing on the recording medium are stored in association with each other. A user instructs the printing apparatus 10 to perform the printing on the recording medium using the medium information group.

The printing apparatus 10 is, for example, a so-called production printer used for printing for office use. The production printer has a function of executing high-speed printing processing with high image quality, compared to a printer for home use. The printing apparatus 10 is not limited to the production printer and may be a printer for business use, a printer for home use, or the like.

The printing apparatus 10 includes a feeding unit 11, a printing unit 12, a post-processing unit 13, a display and operation unit 14, and an environment sensor 15. The printing apparatus 10 includes a control unit 100 that controls the whole printing apparatus 10.

The feeding unit 11 feeds a recording medium on which the printing is performed. The feeding unit 11 includes a plurality of feeding trays 11A, 11B, and 11C for accommodating each type of recording media to be fed. In the example illustrated in FIG. 1, the feeding unit 11 includes two feeding trays 11A, two feeding trays 11B, and two feeding trays 11C. Each of the feeding trays 11A to 11C can feed recording media having different sizes or the same size.

The printing unit 12 may use not only an electrophotographic method of fixing and forming an image by transferring toner clinging to a charged and exposed photoconductor to a recording material but also, for example, an ink jet method of forming an image by ejecting ink onto a recording material.

The post-processing unit 13 performs various types of post-processing on the recording medium on which the printing is performed by the printing unit 12. The post-processing unit 13 is provided with, for example, processing of discharging printed matters of the same page as a unit by changing positions (that is, stack processing), staple processing of stapling a plurality of sheets of recording media, and processing of binding a plurality of sheets of recording media with an adhesive tape.

The display and operation unit 14 is an interface that displays various images for operation and various types of information for notifying a user and receives operations of the user. The display and operation unit 14 includes, for example, an input unit such as a button for operation or a touch sensor that detects an operation performed with a fingertip of the user, and a display unit such as a liquid crystal display or an organic electro-luminescent (EL) display.

The environment sensor 15 measures a state of an environment in which the printing apparatus 10 is installed. The environment sensor 15 includes, for example, a thermometer and a hygrometer. In the example illustrated in FIG. 1, the environment sensor 15 is disposed inside the printing apparatus 10 and is disposed near the feeding unit 11. The environment sensor 15 may be disposed outside the printing apparatus 10.

The medium measuring device 30 is an example of a medium measuring device that measures a recording medium. The medium measuring device 30 includes a housing 31 including a sensor for measuring the recording medium, and a gap 32 for inserting the recording medium, and is configured to be compact and incorporate a box. The medium measuring device 30 may be provided inside the printing apparatus 10. For example, the sensor for measuring the recording medium may be provided on a transport path for transporting the recording medium in the printing apparatus 10 and measure the recording medium while the recording medium is transported. Alternatively, for example, sensors may be provided in the feeding trays 11A to 11C of the printing apparatus 10, and the recording media accommodated in the feeding trays may be measured.

The server apparatus 50 functions as a database that stores a plurality of medium information groups. In the medium information group, the characteristic of the recording medium and the printing parameter for performing the printing are stored in association with each other. The server apparatus 50 is an example of an information processing apparatus. The printing parameter is an example of control information for controlling the printing.

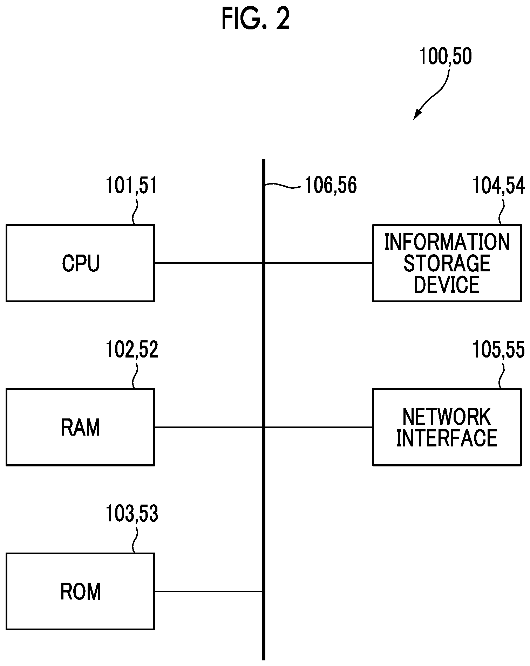

FIG. 2 is a block diagram illustrating an example of a hardware configuration of the control unit 100 of the printing apparatus 10 and an example of a hardware configuration of the server apparatus 50.

The control unit 100 of the printing apparatus 10 includes a central processing unit (CPU) 101, a random access memory (RAM) 102, a read only memory (ROM) 103, an information storage device 104, a network interface 105, and a signal line 106.

The CPU 101 controls the whole printing apparatus 10 as an example of a processor. In a case where a control program is executed by the CPU 101, each functional unit of the printing apparatus 10 is controlled. The RAM 102 is used as a work area in a case where the CPU 101 performs calculation. The ROM 103 is a memory in which various programs and the like executed by the CPU 101 are recorded. The information storage device 104 stores various settings used for controlling the printing apparatus 10, image information used for the printing, and the like. A hard disk drive (HDD), a semiconductor memory, or the like can be used as the information storage device 104. The network interface 105 transmits and receives data via the network 90 (see FIG. 1). Each unit of the control unit 100 is connected via a bus or the signal line 106.

As a hardware configuration of the server apparatus 50, for example, the same hardware configuration as the control unit 100 of the printing apparatus 10 can be used. The server apparatus 50 includes a CPU 51, a RAM 52, a ROM 53, an information storage device 54, a network interface 55, and a signal line 56. The CPU 51 controls the server apparatus 50 as an example of a processor. In a case where a control program is executed by the CPU 51, each functional unit of the server apparatus 50 is controlled. The RAM 52 is used as a work area in a case where the CPU 51 performs calculation. The ROM 53 is a memory in which various programs and the like executed by the CPU 51 are recorded.

The information storage device 54 stores a trained machine learning model used for information processing via the server apparatus 50, various settings used for calculation control, the medium information group, and the like. A hard disk drive (HDD), a semiconductor memory, or the like can be used as the information storage device 54. The information storage device 54 stores, for example, the medium information group.

The network interface 55 transmits and receives data to and from the printing apparatus 10 and the medium measuring device 30 via the network 90 (see FIG. 1).

Each unit of the server apparatus 50 is connected via a bus or the signal line 56.

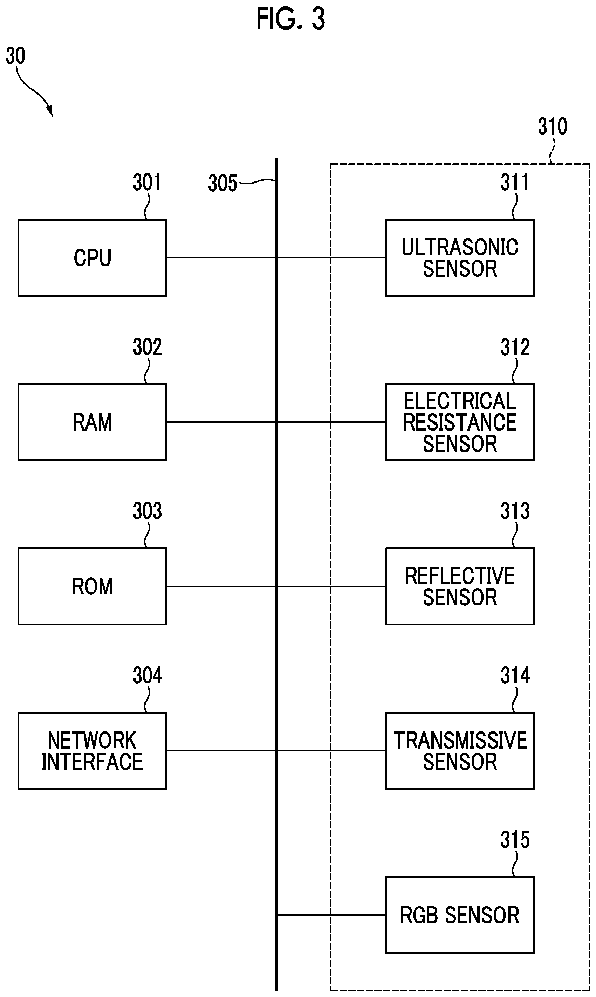

FIG. 3 is a block diagram illustrating an example of a hardware configuration of the medium measuring device 30.

The medium measuring device 30 includes a CPU 301, a RAM 302, a ROM 303, a network interface 304, a bus 305, and a sensor unit 310.

The CPU 301 controls the whole medium measuring device 30 as an example of a processor. In a case where a control program is executed by the CPU 301, each functional unit of the medium measuring device 30 is controlled. The RAM 302 is used as a work area in a case where the CPU 301 performs calculation. The ROM 303 is a memory in which various programs and the like executed by the CPU 301 are recorded.

The network interface 304 transmits measurement values measured by various sensors of the sensor unit 310 (described later) to the server apparatus 50 (see FIG. 1) via the network 90 (see FIG. 1).

The sensor unit 310 includes a sensor that measures a physical property of the recording medium. Types and the number of sensors included in the sensor unit 310 are not particularly limited. In the illustrated example, the sensor unit 310 includes an ultrasonic sensor 311, an electrical resistance sensor 312, a reflective sensor 313, a transmissive sensor 314, and an RGB sensor 315.

The ultrasonic sensor 311 generates an ultrasonic wave having a predetermined intensity from one side of the recording medium in a thickness direction to the recording medium, and measures the intensity of the ultrasonic wave on the other side of the recording medium in the thickness direction.

The electrical resistance sensor 312 measures electrical resistance of the recording medium by causing a microcurrent to flow through the recording medium. The electrical resistance sensor 312, for example, measures volume resistance as the electrical resistance of the recording medium in the thickness direction by causing the microcurrent to flow in the thickness direction of the recording medium. Alternatively, for example, the electrical resistance sensor 312 may measure surface resistance as the electrical resistance in a direction along a surface of the recording medium by causing the microcurrent to flow in the direction along the surface of the recording medium.

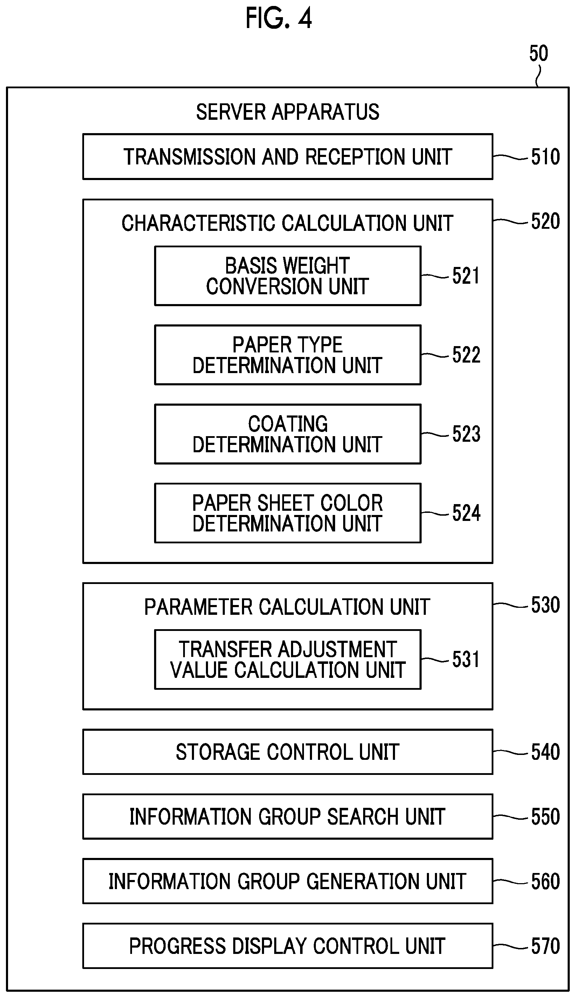

The reflective sensor 313 measures reflected light of the recording medium. More specifically, intensities of specularly reflected light and diffusely reflected light on the surface of the recording medium are measured. The transmissive sensor 314 measures an intensity of transmitted light of the recording medium. The RGB sensor 315 measures the intensity of the reflected light from the recording medium for each of red (R), green (G), and blue (B). Measurement values that are measurement results of these sensors are examples of information related to the physical property of the recording medium. The information related to the physical property of the recording medium may include, in addition to the measurement values, information on the physical property of the recording medium calculated from the measurement values. For example, in the present exemplary embodiment, the measurement value of the ultrasonic sensor 311 is converted into a basis weight of the recording medium by a basis weight conversion unit 521 (see FIG. 4) of the server apparatus 50 (described later). However, the medium measuring device 30 may calculate the basis weight of the recording medium from the measurement value of the ultrasonic sensor 311. The basis weight of the recording medium is an example of the physical property of the recording medium. That is, examples of the information related to the physical property of the recording medium include an electrical characteristic such as the electrical resistance of the recording medium, a physical characteristic such as the basis weight, and other characteristics such as the reflected light, the transmitted light, and color.

The medium measuring device 30 outputs values obtained by measuring the physical property of the recording medium via each sensor of the sensor unit 310 to the server apparatus 50 (see FIG. 1) as the measurement values. For example, in a case where the electrical resistance of the recording medium is measured, a value in Ω units is output to the server apparatus 50 as the measurement value.

### <Functional Configuration of Server Apparatus 50>

FIG. 4 is a block diagram illustrating an example of a functional configuration of the server apparatus 50.

The server apparatus 50 includes a transmission and reception unit 510, a characteristic calculation unit 520, a parameter calculation unit 530, a storage control unit 540, an information group search unit 550, an information group generation unit 560, and a progress display control unit 570.

The transmission and reception unit 510 is connected to the printing apparatus 10 (see FIG. 1) and the medium measuring device 30 (see FIG. 1) using the network interface 55 (see FIG. 2) and transmits and receives various types of information. The transmission and reception unit 510 receives the measurement values measured by the sensor unit 310 (see FIG. 3) of the medium measuring device 30 from the medium measuring device 30. The transmission and reception unit 510 receives, from the medium measuring device 30, a start signal indicating that the measurement is started, and a finish signal indicating that the measurement is finished. The transmission and reception unit 510 receives an instruction of the user from the printing apparatus 10 and transmits various types of information corresponding to the instruction of the user to the printing apparatus 10.

The characteristic calculation unit 520 calculates the characteristic of the recording medium using the information related to the physical property of the recording medium. In the present exemplary embodiment, the characteristic calculation unit 520 calculates characteristic information of the recording medium using the measurement values acquired by receiving the measurement values from the medium measuring device 30. Here, the calculation may include not only calculating a value of the characteristic information of the recording medium by performing elementary arithmetic on the measurement values, but also performing analysis based on an artificial intelligence using the trained machine learning model.

In the present exemplary embodiment, the characteristic information of the recording medium is calculated using a measurement value of the environment sensor 15 of the printing apparatus 10, in addition to the measurement values acquired from the medium measuring device 30. A source from which the information related to the physical property of the recording medium used for calculating the characteristic of the recording medium via the characteristic calculation unit 520 is acquired is not particularly limited, and the information related to the physical property of the recording medium may be acquired from a database in which the information related to the physical property of the recording medium is stored. For example, the information related to the physical property of the recording medium may be stored in advance in association with a product name, a product number, and the like of the recording medium. In this case, the characteristic of the recording medium may be calculated using the information related to the physical property of the recording medium associated with the product name, the product number, and the like of the recording medium. Alternatively, for example, the measurement values may be acquired from a history of past measurement performed by the medium measuring device 30, and the characteristic of the recording medium may be calculated using the past measurement values of the medium measuring device 30 and the current measurement value of the environment sensor 15.

Here, the characteristic information is information on the recording medium derived from the physical property of the recording medium. Examples of the characteristic information include a type of the recording medium, presence or absence of a coating, the basis weight of the recording medium, and the color of the paper sheet. The type of the recording medium is a category in which the recording media are divided by a material, such as plain paper, embossed paper, and a film.

The characteristic calculation unit 520 includes the basis weight conversion unit 521, a paper type determination unit 522, a coating determination unit 523, and a paper sheet color determination unit 524.

The basis weight conversion unit 521 converts the basis weight using at least the measurement value of the ultrasonic sensor 311. The basis weight conversion unit 521 may convert the basis weight further using the measurement value of the ultrasonic sensor 311. The paper type determination unit 522 estimates light transmittance of the recording medium using at least the measurement value of the transmissive sensor 314 and, for example, distinguishes between embossed paper and plain paper. The paper type determination unit 522 may further perform determination related to a paper type using the measurement values of the sensors other than the transmissive sensor 314. The coating determination unit 523, for example, determines the presence or absence of the coating from the intensities of the specularly reflected light and the diffusely reflected light on the surface of the recording medium using at least the measurement value of the reflective sensor 313. The coating determination unit 523 may further perform determination related to the coating using the measurement values of the sensors other than the reflective sensor 313. For example, a type of coating such as a matte coating or a cast coating may be determined. The paper sheet color determination unit 524 determines a paper sheet color (the color of the recording medium) using the measurement value of the RGB sensor 315.

The parameter calculation unit 530 calculates the printing parameter using the measurement values acquired from the medium measuring device 30. The parameter calculation unit 530 includes a transfer adjustment value calculation unit 531. The transfer adjustment value calculation unit 531 calculates a transfer voltage using at least the measurement value of the electrical resistance of the recording medium acquired from the medium measuring device 30. In calculating the transfer voltage, the transfer adjustment value calculation unit 531 may further use other measurement values for the calculation. The printing parameter calculated by the parameter calculation unit 530 is not limited to the transfer voltage. For example, a fixing temperature setting value for fixing a coloring material image to the recording medium, a transfer output, a fixing drying temperature, and the like may be calculated. The parameter calculation unit 530 may perform analysis or the like based on the artificial intelligence using the trained machine learning model.

The storage control unit 540 adds the medium information group to the medium characteristic list in which the medium information group is collected, or changes content of the medium information group included in the medium characteristic list. In the present exemplary embodiment, the medium characteristic list is stored in the information storage device 54 of the server apparatus 50. In the medium information group, a "name" for identifying the medium information, the "characteristic of the recording medium", and the "printing parameter" created as printing quality intended by the user are stored in association with each other. Examples of the "printing parameter" include an alignment roll load, a transfer nip load, the transfer output, the fixing drying temperature, a fixing nip temperature, air assist for the paper sheet trays, registration/alignment adjustment, curl correction, and a print speed. The medium information group may include a comment or the like input by the user.

The storage control unit 540 stores a standard list in the information storage device 54 of the server apparatus 50. Here, the standard list is, for example, a list of medium information groups created by a manufacturer in manufacturing the printing apparatus 10. In general, the printing parameter stored in the standard list is not set to the printing parameter corresponding to status of use in which the user uses the printing apparatus 10. For example, the printing parameter may be corrected in accordance with a temperature or humidity of a place in which the printing apparatus 10 is disposed, and a value of the printing parameter may be corrected in accordance with the printing quality intended by the user. The medium information group specific to the user is registered in the medium characteristic list in accordance with the status of the user.

The information group search unit 550 searches for the registered medium information group using the medium information group created by measuring the recording medium via the medium measuring device 30.

More specifically, a new recording medium is measured by the medium measuring device 30, and a matching ratio with respect to the medium information group registered in the medium characteristic list is calculated using the characteristic information calculated by the characteristic calculation unit 520 and the printing parameter calculated by the parameter calculation unit 530. The medium information group having a high matching ratio is displayed to the user as a search result. Here, the number of medium information groups displayed to the user as the search result may be only one of the medium information groups having the highest matching ratio, or a plurality of medium information groups may be displayed to the user in a descending order of the matching ratio.

In comparing the characteristic information of the new recording medium measured by the medium measuring device 30 with the printing parameter, all pieces of the calculated characteristic information and all calculated printing parameters may be used for the comparison. In comparing the characteristic information of the new recording medium measured by the medium measuring device 30 with the printing parameter, a part of the calculated characteristic information and a part of the printing parameters may be used for the comparison. In comparing the characteristic information of the new recording medium measured by the medium measuring device 30 with the printing parameter, the comparison may be performed with only the calculated characteristic information, or the comparison may be performed with only the calculated printing parameter. An item of which a value is frequently changed depending on preference of the user may not be used as an item to be compared. For example, in a case where a search is performed using an item of which a numerical value is frequently changed depending on the preference of the user, a search result appropriate for other users may not be obtained. That is, a parameter value to be used for the comparison and a parameter value not to be used for the comparison may be determined in advance among the printing parameters. In performing the comparison, the comparison may be performed using not only the calculated characteristic information and the calculated printing parameter but also the measurement values used for the calculation.

The information group generation unit 560 creates the medium information group using the characteristic information and the printing parameter calculated by the characteristic calculation unit 520 and the parameter calculation unit 530. The information group generation unit 560 acquires the medium information group having a high matching ratio with respect to the calculated characteristic information and the calculated printing parameter by copying the medium information group from the standard list. A new medium information group is obtained by overwriting the acquired medium information group with the calculated characteristic information and the calculated printing parameter.

The information group generation unit 560 may acquire the medium information group having a high matching ratio with respect to the calculated characteristic information and the calculated printing parameter by copying the medium information group from the medium characteristic list. In this case, a new medium information group is obtained by overwriting the acquired medium information group with the calculated characteristic information and the calculated printing parameter.

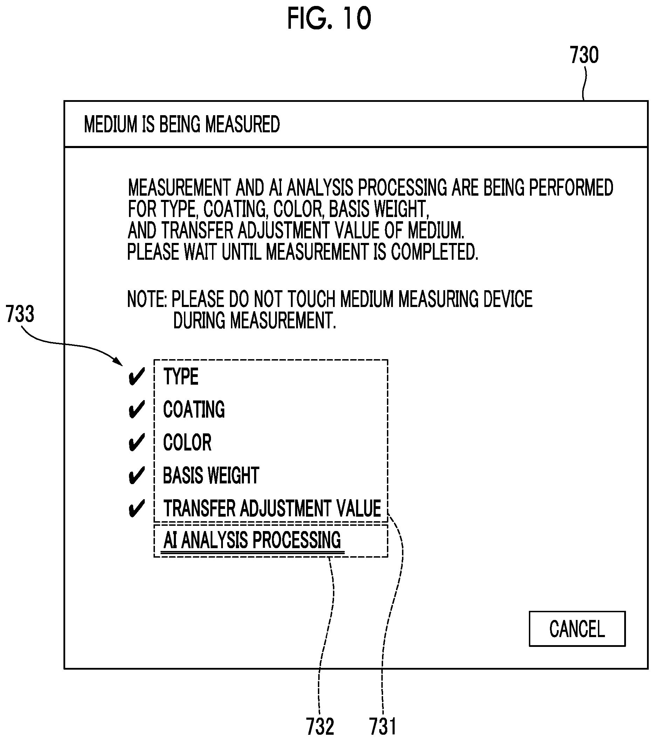

The progress display control unit 570 generates a progress screen 730 (see FIG. 10) displayed on the display and operation unit 14. The progress screen 730 displays a progress from the start of the measurement by the medium measuring device 30 to the finish of the calculation of the characteristic information and the printing parameter by the characteristic calculation unit 520 and the parameter calculation unit 530. More specifically, the progress display control unit 570 displays the progress screen 730 in response to reception of the start signal from the medium measuring device 30 by the transmission and reception unit 510.

In displaying pseudo progress status, predetermined items are displayed to be arranged, and each predetermined item is displayed in a highlighted manner in order. Hereinafter, the predetermined items for displaying the pseudo progress status may be referred to as pseudo items. The pseudo items are not particularly limited. For example, an item determined based on the measurement values output from the medium measuring device 30 can be used.

Here, for example, information related to the characteristic of the recording medium calculated based on the measurement values of the medium measuring device 30 is an example of the item determined based on the measurement values output from the medium measuring device 30. More specifically, "type", "coating", "color", and "basis weight" are examples of the information related to the characteristic of the recording medium calculated based on the measurement values of the medium measuring device 30.

Alternatively, here, for example, the printing parameter calculated based on the measurement values of the medium measuring device 30 is an example of the item determined based on the measurement values output from the medium measuring device 30. More specifically, for example, "transfer output adjustment value" is an example of the printing parameter calculated based on the measurement values of the medium measuring device 30.

Examples of a method of displaying the predetermined items in a highlighted manner in order include displaying one pseudo item while causing the pseudo item to flash, or displaying one pseudo item in a different color. By displaying each pseudo item in a highlighted manner, a display that looks as though processing of the pseudo item is being performed is displayed. Examples of the method of displaying the pseudo items in a highlighted manner also include a method of displaying a progress bar in association with the pseudo items. Examples of the method of displaying the pseudo items in a highlighted manner also include a method of displaying a display showing that processing is being performed by rotating a cursor in association with the pseudo items.

The progress screen 730 displays a pseudo progress over a predetermined time. Then, a display showing that calculation is being performed is displayed, and a display showing that the calculation is finished is displayed in accordance with the actual finish of the calculation.

The predetermined time for displaying the pseudo progress is set by, for example, a manager who manages the information group creation system 1. A length of a time for the highlighted display for each item can be set to a time obtained by dividing the predetermined time by the number of pseudo items. Alternatively, for example, the length of the time for the highlighted display may be different for each pseudo item, or for example, the manager who manages the information group creation system 1 may determine the length of the time for the highlighted display in advance for each pseudo item.

A display showing that the highlighted display is completed is displayed in association with the pseudo item of which the highlighted display is completed. Hereinafter, the display showing that the highlighted display is completed may be referred to as a completion display. A shape of the completion display is not particularly limited. For example, a circular or quadrangular symbol or a check mark can be used.

Alternatively, as the length of the time for displaying the pseudo progress, for example, a history of past measurement times of the medium measuring device 30 may be acquired, and an average time of the measurement times may be used.

In the present exemplary embodiment, as the display showing the pseudo progress, the characteristic information and the printing parameter calculated by the characteristic calculation unit 520 and the parameter calculation unit 530 are displayed to be arranged. Each item displayed to be arranged is displayed in a highlighted manner in order.

After the display showing the pseudo progress is displayed, the progress display control unit 570 displays the progress status in accordance with the actual measurement status of the medium measuring device 30. As the display of the progress status in accordance with the actual measurement status, a predetermined item is displayed, and a length of highlighted display of the predetermined item is changed in accordance with the actual measurement time. Hereinafter, the predetermined item used for displaying the progress status corresponding to the actual measurement status may be referred to as a changing item.

Examples of changing the length of the highlighted display in accordance with the actual measurement time include changing the length of the highlighted display in accordance with a time in which calculation processing that changes in accordance with the actual measurement time is finished.

In the present exemplary embodiment, as the changing item, an item "AI analysis processing" (see FIG. 10) indicating that the characteristic calculation unit 520 and the parameter calculation unit 530 perform analysis based on the artificial intelligence is used as the changing item.

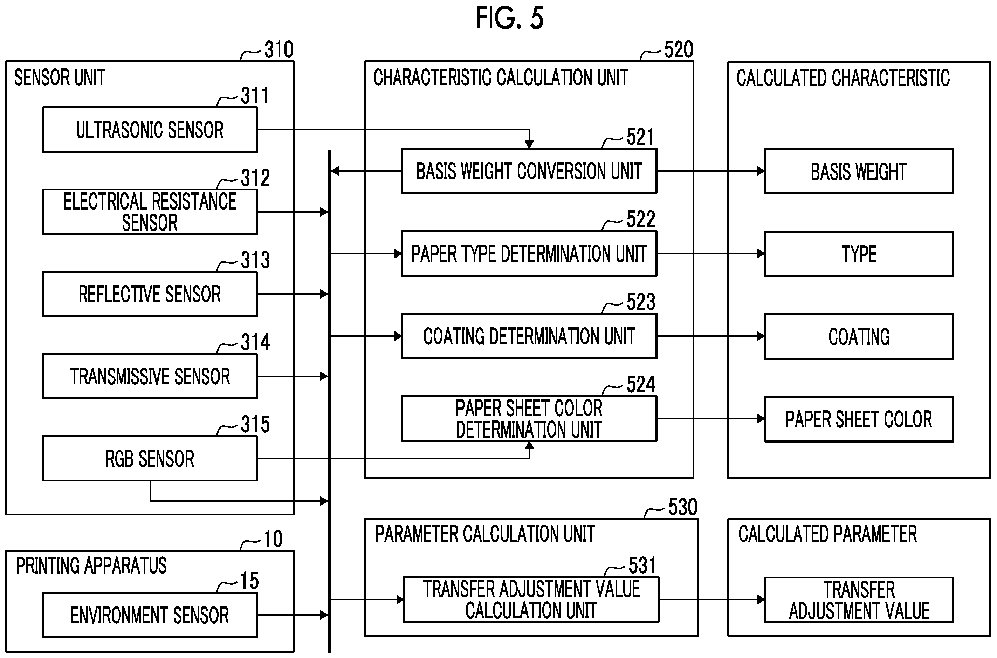

FIG. 5 is a diagram for describing an example of a flow of calculating the characteristic information of the recording medium and the printing parameter from the measurement values measured by the sensor unit 310 and the environment sensor 15.

As illustrated, the basis weight conversion unit 521 converts the measurement value of the ultrasonic sensor 311 into a basis weight. The basis weight converted by the basis weight conversion unit 521 is output as the characteristic information and is used as input values of the characteristic calculation unit 520 and the parameter calculation unit 530.

The paper type determination unit 522 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The paper type determination unit 522 outputs the type of the recording medium from the input values.

The coating determination unit 523 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The coating determination unit 523 determines and outputs the presence or absence of the coating from the input values.

The paper sheet color determination unit 524 receives input of the value of the RGB sensor 315 and outputs the paper sheet color.

The transfer adjustment value calculation unit 531 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The transfer adjustment value calculation unit 531 outputs a transfer adjustment value using the input basis weight and the input measurement values.

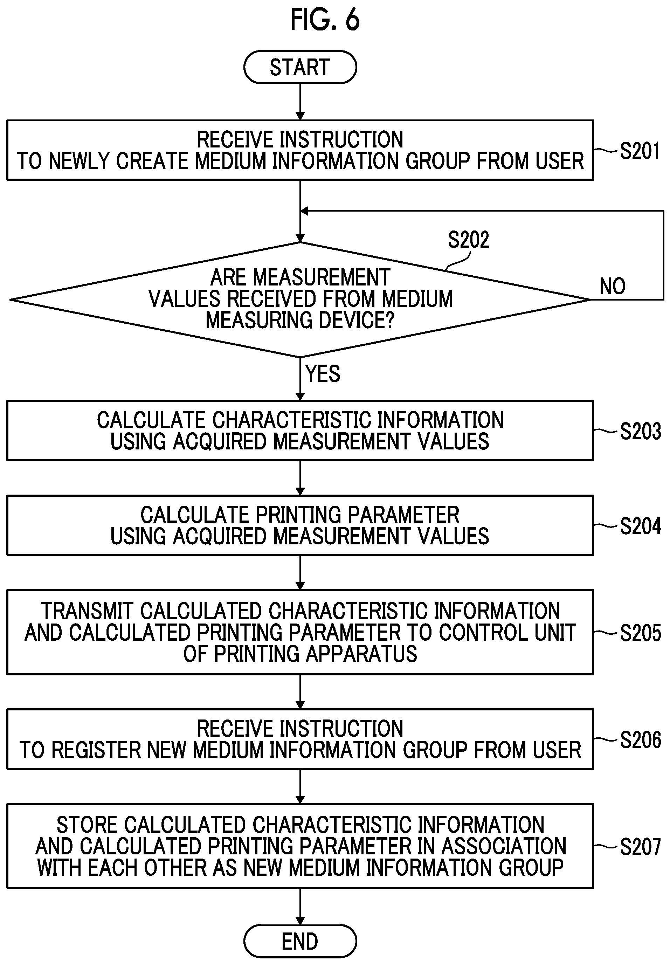

FIG. 6 is a diagram illustrating an example of processing in a case where a new medium information group is created using the medium measuring device 30.

First, in a case where the transmission and reception unit 510 of the server apparatus 50 receives an instruction to newly create the medium information group from the user (step S201), the transmission and reception unit 510 determines whether or not the measurement values are received from the medium measuring device 30 (step S202). In a case where the measurement values are not received from the medium measuring device 30 (NO in step S202), the processing returns to step S202, and whether or not the measurement values are received from the medium measuring device 30 is determined again. In a case where the measurement values are received from the medium measuring device 30 (YES in step S202), the characteristic calculation unit 520 calculates the characteristic information of the recording medium using the acquired measurement values (step S203). The parameter calculation unit 530 calculates the printing parameter using the acquired measurement values (step S204). The server apparatus 50 transmits the calculated characteristic information of the recording medium and the calculated printing parameter to the control unit 100 of the printing apparatus 10 (step S205). The server apparatus 50 receives an instruction to register the new medium information group from the user via the display and operation unit 14 (step S206). The server apparatus 50 stores the calculated characteristic information of the recording medium and the calculated printing parameter in the information storage device 54 (see FIG. 2) in association with each other as the new medium information group (step S207) and finishes the processing.

The characteristic information used here is, for example, information indicating the characteristic of the recording medium such as a size of the recording medium, the type (material) of the recording medium, the presence or absence of the coating, the number of sheets in one set, presence or absence of a punch hole, the color of the recording medium, and the basis weight of the recording medium.

Examples of the size of the recording medium include sizes determined by the JIS standard, such as A4 size, A5 size, B4 size, and B5 size. Examples of the type of the recording medium include plain paper, coated paper obtained by coating a surface of plain paper with a resin or the like, thick paper having a larger basis weight than plain paper, thin paper having a smaller basis weight than plain paper, and an OHP film. The number of sheets in one set is information indicating the number of sheets in one set in the recording medium of which one set includes a plurality of sheets. The presence or absence of the punch hole is information indicating whether or not a punch hole is made on the recording medium. Various colors such as yellow, blue, and black other than white can be used as the color of the recording medium.

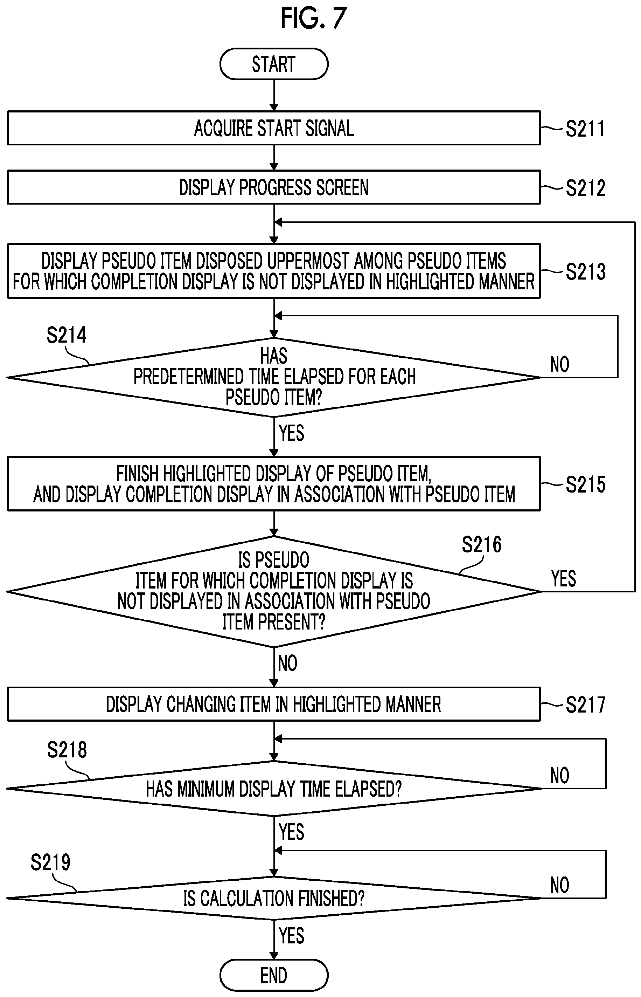

FIG. 7 is a flowchart illustrating an example of a flow of controlling display of a progress screen.

In a case where the transmission and reception unit 510 acquires the start signal (step S211), the progress display control unit 570 displays the progress screen (step S212). The progress display control unit 570 displays, in a highlighted manner, the pseudo item disposed uppermost among the pseudo items for which the completion display is not displayed (step S213).

The progress display control unit 570 determines whether or not the predetermined time has elapsed for each pseudo item (step S214). In a case where the time for pseudo display for each item has not elapsed (NO in step S214), the processing returns to step S214 again, and whether or not the predetermined time has elapsed is determined for each pseudo item. In a case where the predetermined time has elapsed for each pseudo item (YES in step S214), the highlighted display of the pseudo item is finished, and the completion display is displayed in association with the pseudo item (step S215). Whether or not a pseudo item for which the completion display is not displayed in association with the pseudo item is present is determined (step S216). In a case where the pseudo item for which the completion display is not displayed in association with the pseudo item is present (YES in step S216), the processing returns to step S213, and the pseudo item disposed uppermost among the pseudo items for which the completion display is not displayed is displayed in a highlighted manner.

In a case where the pseudo item for which the completion display is not displayed in association with the pseudo item is not present in step S216, the changing item is displayed in a highlighted manner (step S217). The progress display control unit 570 determines whether or not the minimum display time has elapsed (step S218). Here, the minimum display time is a length of time determined in advance as a time for performing at least the display showing that the calculation processing is being performed. Considering quickness of work, the minimum display time may be set to 0 seconds.

In a case where the minimum display time has not elapsed, the processing returns to step S218 again, and whether or not the minimum display time has elapsed is determined. In a case where the minimum display time has elapsed (YES in step S218), the progress display control unit 570 determines whether or not the calculation is finished (step S219). In a case where the calculation is not finished (NO in step S219), the processing returns to step S219 again, and whether or not the calculation is finished is determined. In a case where the calculation is finished (YES in step S219), the highlighted display of the changing item is finished, the completion display is displayed in association with the changing item, and the processing is finished.

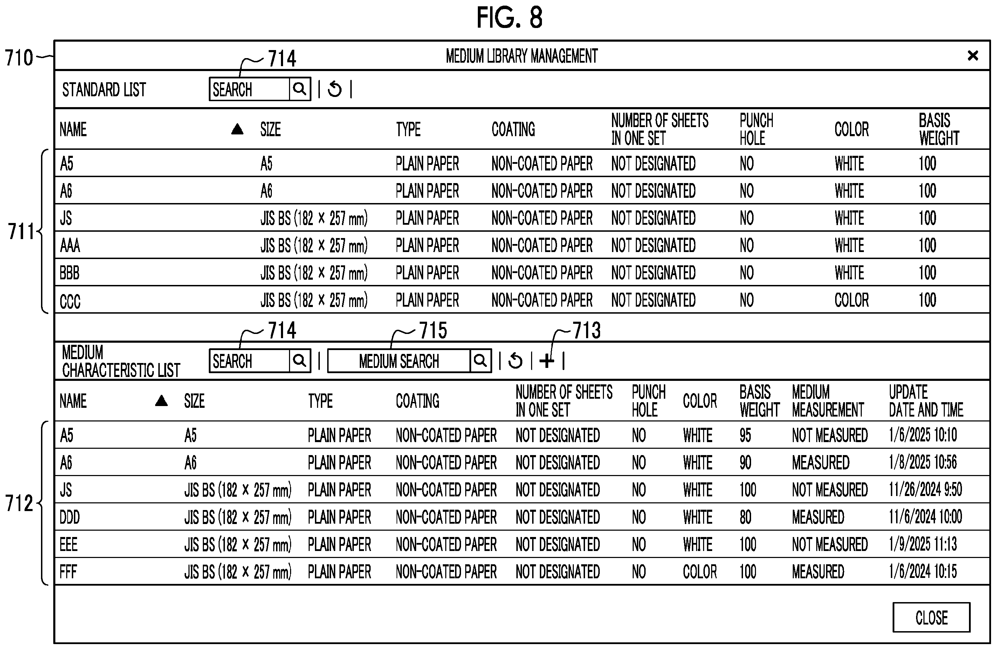

FIG. 8 is a diagram illustrating an example of a list display screen 710 for displaying the standard list and the medium characteristic list.

In the illustrated example, the medium information groups registered in the standard list are displayed in a profile display region 711 in which the medium information groups are listed. In the illustrated example, the profile display region 711 shows six medium information groups having names "A5", "A6", "JS", "AAA", "BBB", and "CCC". In addition, "size", "type", "coating", "number of sheets in one set", "punch hole", "color", and "basis weight" are displayed in association with the name as items registered in the medium information group. Specifically, for the medium information group of which "name" is "A5", "A5" is displayed as the "size", "plain paper" is displayed as "type", "non-coated paper" is displayed as "coating", "not designated" is displayed as "number of sheets in one set", "no" is displayed as "punch hole", "white" is displayed as "color", and "100" is displayed as "basis weight".

The medium information groups registered in the medium characteristic list are displayed in a medium characteristic list display region 712 in which the medium information groups are listed. In the illustrated example, the medium information groups having names "A5", "A6", "JS", "DDD", "EEE", and "FFF" are displayed. While the same name is used as the name of the medium information group between the standard list and the medium characteristic list in the illustrated example, use of the same name may be prevented.

In the illustrated example, "size", "type", "coating", "number of sheets in one set", "punch hole", "color", "basis weight", "medium measurement", and "update date and time" are displayed in association with the "name". Specifically, in the medium characteristic list of which "name" is "A5", "A5" is displayed as "size", "plain paper" is displayed as "type", "non-coated paper" is displayed as "coating", "not designated" is displayed as "number of sheets in one set", "no" is displayed as "punch hole", "white" is displayed as "color", and "95" is displayed as "basis weight". The displayed characteristic information is not limited to the illustrated example, and other characteristics may be displayed.

In the illustrated example, "medium measurement" and "update date and time" are displayed as items of the medium information group displayed in the medium characteristic list, in addition to the items displayed in the above standard list.

Here, a field of "medium measurement" is a field showing whether or not the medium information group is created using the medium measuring device 30 and displays a value of "not measured" or "measured". Here, the medium information group with which "not measured" is associated indicates that the medium information group is registered without using the medium measuring device 30. The medium information group associated with "measured" indicates that the medium information group is created using the medium measuring device 30.

In addition, "update date and time" indicates a date and time when the medium information group is created or updated. In the illustrated example, in the medium information group of which "name" is "A5", "not measured" is shown as "medium measurement", and "2025/1/6 10:10" is shown as "update date and time".

A new creation mark 713 with which the user provides an instruction to create a new medium information group is displayed on the list display screen 710. In a case where the new creation mark 713 is touched, a transition is made to a medium characteristic input screen 720 (described later).

A search box 714 for searching for a name of a profile and a medium search box 715 for searching for performing a search using the medium measuring device 30 are displayed on the list display screen 710. The medium search box 715 is used to perform a search using the information group search unit 550 is performed. Thus, in a case where the medium search box 715 is touched, a display prompting an operation of the medium measuring device 30 is displayed. In a case where the user measures the medium using the medium measuring device 30, the medium information group having a high matching ratio with respect to the measured medium is displayed as a search result.

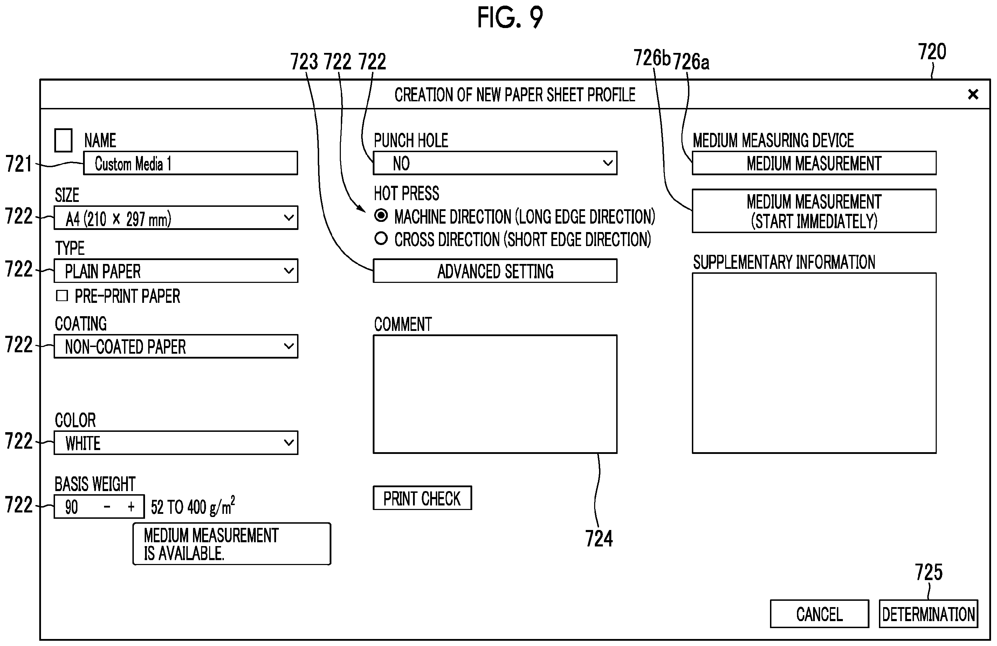

FIG. 9 is a diagram illustrating an example of the medium characteristic input screen 720 displayed in creating a new medium characteristic list. A text box 721 for inputting a name of the new created medium characteristic list is displayed on the medium characteristic input screen 720. A plurality of input units 722 for inputting medium characteristics are displayed on the medium characteristic input screen 720. Text information indicating items of the characteristics input by the input units 722 is displayed in association with the input units 722. A method for inputting the medium characteristics into the input units 722 is not particularly limited. Examples of the method include a method of displaying options using a pull-down method and making a selection, a method of inputting a numerical value, and a method of making a selection using a radio button.

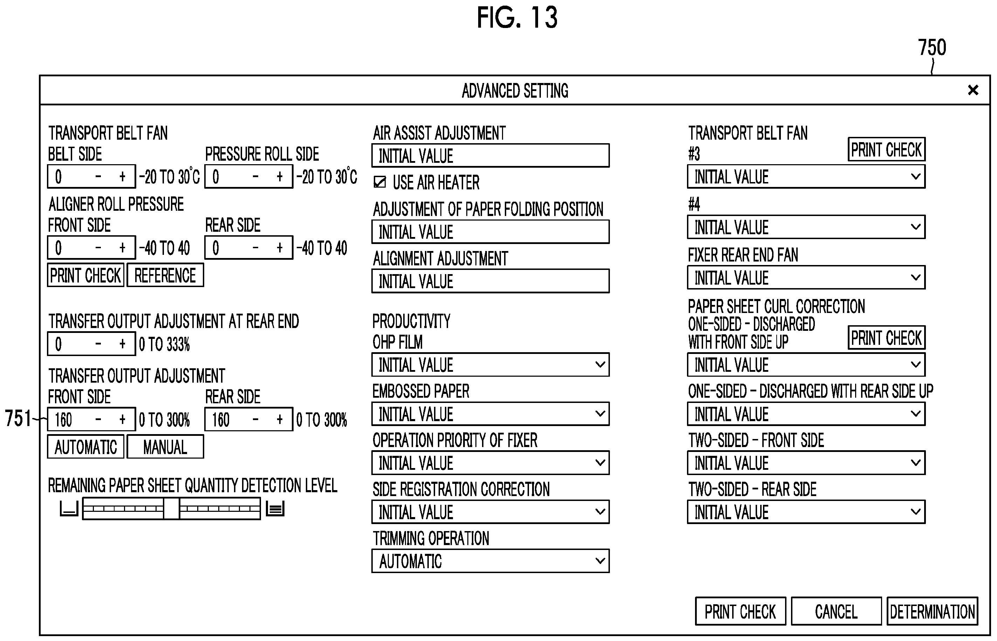

The medium characteristic input screen 720 includes a transition button 723 for transitioning to a printing parameter input screen 750 (see FIG. 13) for inputting the printing parameter. The transition button 723 is displayed as "advanced setting". The printing parameter input screen 750 will be described later.

A sentence input field 724 for the user to input text information is provided on the medium characteristic input screen 720. The sentence input field 724 is a field in which the user can freely provide input, and a text "comment" is displayed in association with the sentence input field 724 near the sentence input field 724. Content input into the sentence input field 724 is not particularly limited.

A button 726a and a button 726b that are buttons for determining to create the medium characteristic list using the medium measuring device 30 (see FIG. 1) are displayed on the medium characteristic input screen 720. The button 726a is displayed as "medium measurement", and the button 726b is displayed as "medium measurement (start immediately)". In a case where the button 726a is selected, a screen (not illustrated) showing a method of using the medium measuring device 30 is displayed. The user measures the recording medium by operating the medium measuring device 30 with reference to the screen showing the method of using the medium measuring device 30. In a case where the button 726b is selected, the measurement of the recording medium by the medium measuring device 30 is immediately started.

A determination button 725 for determining to register the medium characteristic list is displayed on the medium characteristic input screen 720. The determination button 725 is displayed as "determination". In a case where the determination button 725 is selected, the server apparatus 50 registers the input medium information group in the medium characteristic list.

FIG. 10 is a diagram illustrating an example of the progress screen 730 displayed in a case where the medium measuring device 30 measures the recording medium.

A sentence indicating that the measurement by the medium measuring device 30 and the AI analysis processing by the server apparatus 50 are being performed is displayed on the progress screen 730. More specifically, as illustrated, "Measurement and AI analysis processing are being performed for the type, the coating, the color, the basis weight, and the transfer adjustment value of the medium. Please wait until the measurement is completed." is displayed in an upper portion in the progress screen 730.

A plurality of pseudo items 731 displayed as each of "type", "coating", "color", "basis weight", and "transfer adjustment value" are displayed on the progress screen 730. A changing item 732 displayed as "AI analysis processing" is displayed on the progress screen 730.

In the illustrated example, a completion display 733 is displayed in association with the pseudo items 731. In the illustrated example, the changing item 732 displayed as "AI analysis processing" is displayed in a highlighted manner with a double underline.

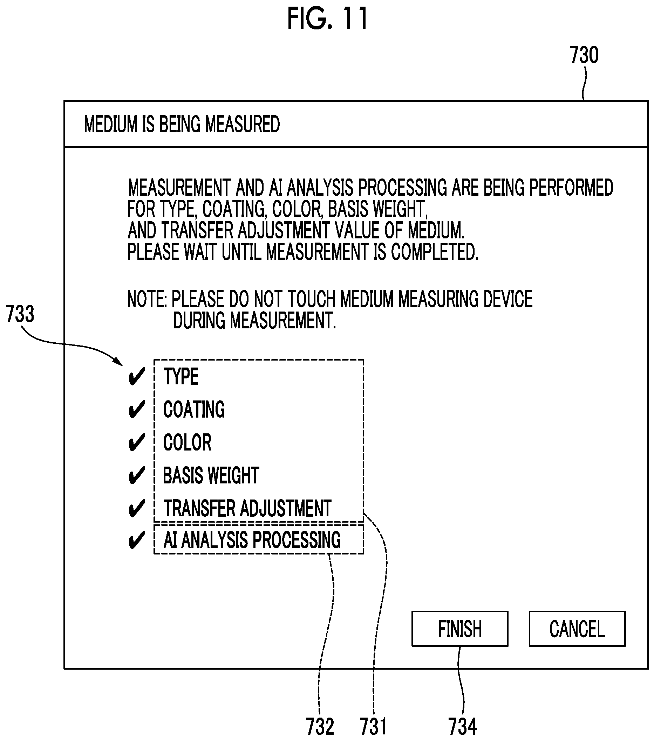

FIG. 11 is a diagram illustrating an example of the progress screen 730 in a case where the calculation is finished.

The progress screen 730 illustrated in FIG. 11 shows a state where the highlighted display of the changing item is finished in FIG. 7, the completion display is displayed in association with the changing item, and a finish button is displayed.

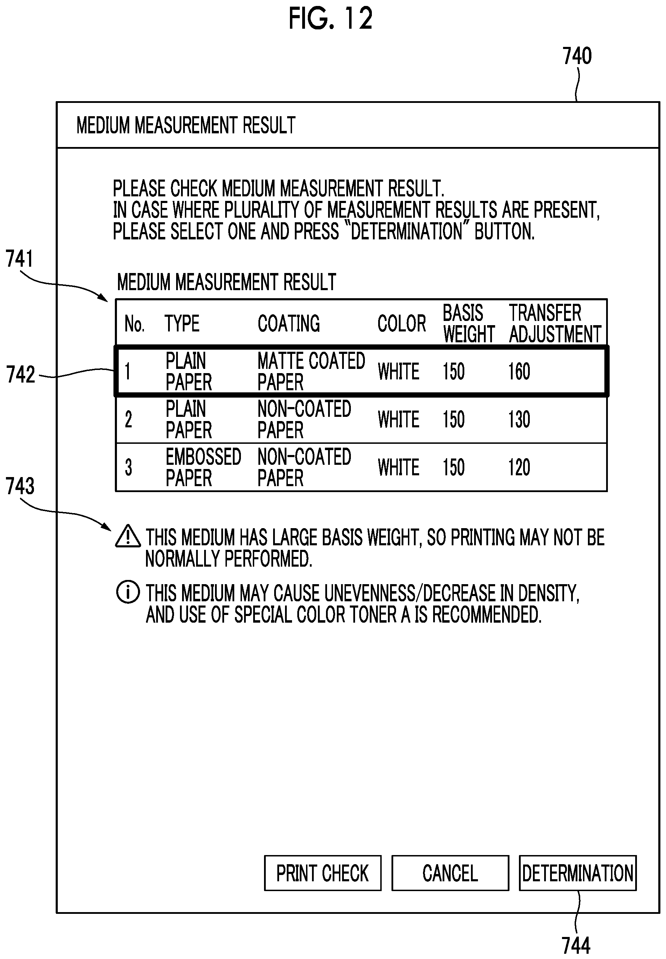

On the progress screen 730 illustrated in FIG. 11, the highlighted display of the changing item 732 displayed as "AI analysis processing" is finished, and the completion display 733 is displayed in association with the changing item 732, compared to the progress screen 730 illustrated in FIG. 10. In addition, on the progress screen 730 illustrated in FIG. 11, a display finish button 734 is displayed, compared to the progress screen 730 illustrated in FIG. 10. In a case where the display finish button 734 is selected, the display of the progress screen 730 is finished, and a result screen 740 (see FIG. 12) is displayed.

The display finish button 734 may not be displayed. In this case, for example, in a case where a predetermined time elapses after the completion display 733 is displayed in association with the changing item 732 displayed as "AI analysis processing", the progress screen 730 may automatically transition to the result screen 740. Here, the predetermined time can be set as, for example, a time (for example, 1 second or 2 seconds) in which the user can recognize the completion display 733 associated with "AI analysis processing".

FIG. 12 is a diagram illustrating an example of a result screen 740 showing the measurement results of the medium measuring device 30.

The result screen 740 is displayed after the calculation of the characteristic information and the calculation of the printing parameter using the measurement values provided by the medium measuring device 30 are completed. The result screen 740 displays the characteristic information of the recording medium and the printing parameter calculated using the measurement values provided by the medium measuring device 30. In the illustrated example, three measurement results are displayed in a measurement result display field 741. Each measurement result displays the characteristic information of the recording medium and the printing parameter in association with "No." indicating a number for distinguishing the result. In the illustrated example, "type", "coating", "color", and "basis weight" are displayed as the characteristic information of the recording medium. In the illustrated example, "transfer adjustment" is displayed as the printing parameter. Specifically, in the measurement result of which "No." is "1", "plain paper" is displayed as "type", "matte coated paper" is displayed as "coating", "white" is displayed as "color", "150" is displayed as "basis weight", and "160" is displayed as "transfer adjustment".

In the measurement result display field 741, a frame 742 indicating which measurement result is selected among the displayed measurement results is displayed. The user selects the measurement result by touching a region in which the measurement result is displayed. The frame 742 moves to surround the selected measurement result.

An item of the characteristic of the recording medium displayed in the measurement result display field 741 and an item of the printing parameter to be displayed are not particularly limited, and other items may be displayed.

A supplement 743 is displayed in a center portion of the result screen 740. In the supplement 743, for example, information determined in advance based on the characteristic of the recording medium is displayed. For example, information for recommending a type of ink toner corresponding to the type of the recording medium is displayed. In addition, for example, whether or not the printing can be performed in accordance with the basis weight of the recording medium is displayed. In the illustrated example, "This medium has a large basis weight, so printing may not be normally performed." and "This medium may cause unevenness/a decrease in density, and use of special color toner A is recommended." are displayed in the supplement 743.

A determination button 744 for determining the selection of the measurement result is displayed in the lower portion of the result screen 740. In a case where the determination button 744 is touched by the user, the display screen transitions to a printing parameter input screen 750 (see FIG. 13).

FIG. 13 is an example of the printing parameter input screen 750.

The illustrated example shows an example of the printing parameter input screen 750 to which a transition is made after selecting and determining the measurement result of which the number of the measurement result is 1 on the result screen 740 illustrated in FIG. 12.

On the printing parameter input screen 750, a plurality of input fields for inputting the printing parameter are displayed together with a display showing the item of the printing parameter. In the illustrated example, a numerical value is automatically input into a numerical value input box 751 for transfer output adjustment. More specifically, "160" is automatically input into the numerical value input box 751. This numerical value is the transfer output adjustment value calculated by the server apparatus 50 based on the measurement result illustrated in FIG. 12.

### <Update and Registration Processing>

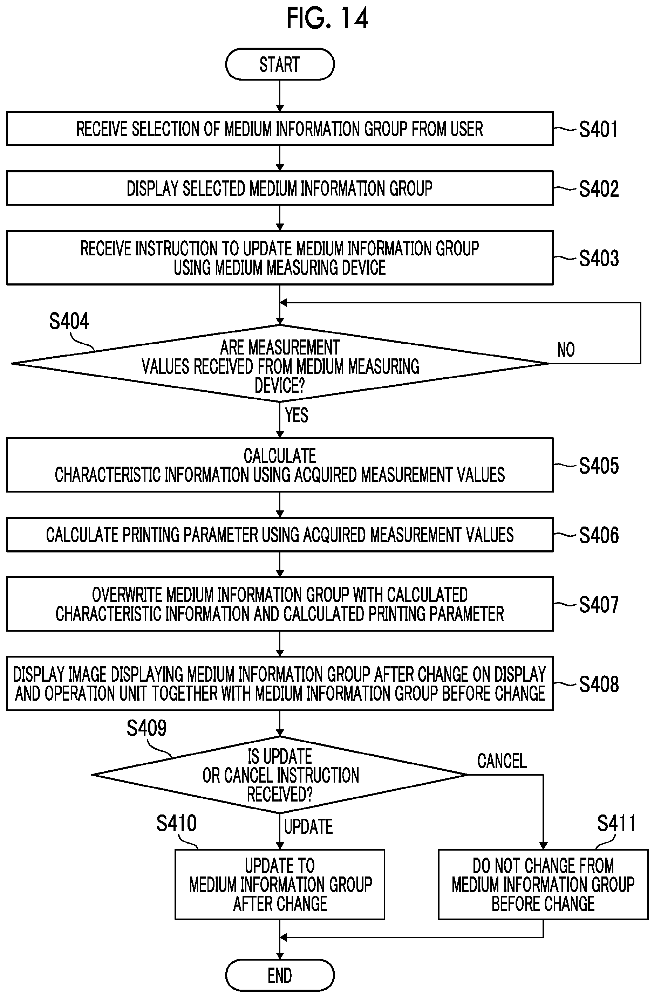

FIG. 14 is a flowchart illustrating an example of a flow of update and registration processing of updating the registered medium information group.

In a case where the medium information group is selected from the user (step S401), the server apparatus 50 displays the selected medium information group on the display and operation unit 14 (step S402). Here, the selected medium information group is selected from the medium information groups stored in the standard list or the medium information groups stored in the medium characteristic list.

In a case where an instruction to update the medium information group using the medium measuring device 30 is received from the user (step S403), the server apparatus 50 determines whether or not the measurement values are received from the medium measuring device 30 (step S404). In a case where the measurement values are not received from the medium measuring device 30 (NO in step S404), the processing returns to step S404 again, and whether or not the measurement values are received from the medium measuring device 30 is determined. In a case where the measurement values are received from the medium measuring device 30 (YES in step S404), the server apparatus 50 calculates the characteristic information using the acquired measurement values (step S405) and calculates the printing parameter using the acquired measurement values (step S406).

The server apparatus 50 overwrites the medium information group with the calculated characteristic information and the calculated printing parameter (step S407). In this case, an item of the printing parameter that may be overwritten and an item of the printing parameter not to be overwritten may be determined in advance. In other words, the printing parameter to be changed and the printing parameter not to be changed may be determined in advance. For example, the printing parameter of which a setting is not changed by the user can be determined as the printing parameter not to be changed.

An image displaying the medium information group after the change together with the medium information group before the change is displayed on the display and operation unit 14 (step S408). The server apparatus 50 determines whether or not an update or cancel instruction is received from the user (step S409). In a case where the update instruction is received in step S409, the medium information group registered in the medium characteristic list is updated to the medium information group after the change (step S410), and the processing is finished. In a case where the medium information group registered in the standard list is selected in step S401, the medium characteristic list in the standard list is not changed, and the medium information group after the change is newly registered in the medium characteristic list.

In a case where the cancel instruction is received in step S409, the medium information group registered in the medium characteristic list is not changed (step S411), and the processing is finished.

In the update and registration processing, the medium information group is acquired, the medium information group is changed using the measurement values acquired from the medium measuring device 30, and in a case where the update instruction is received from the user, the medium information group is updated.

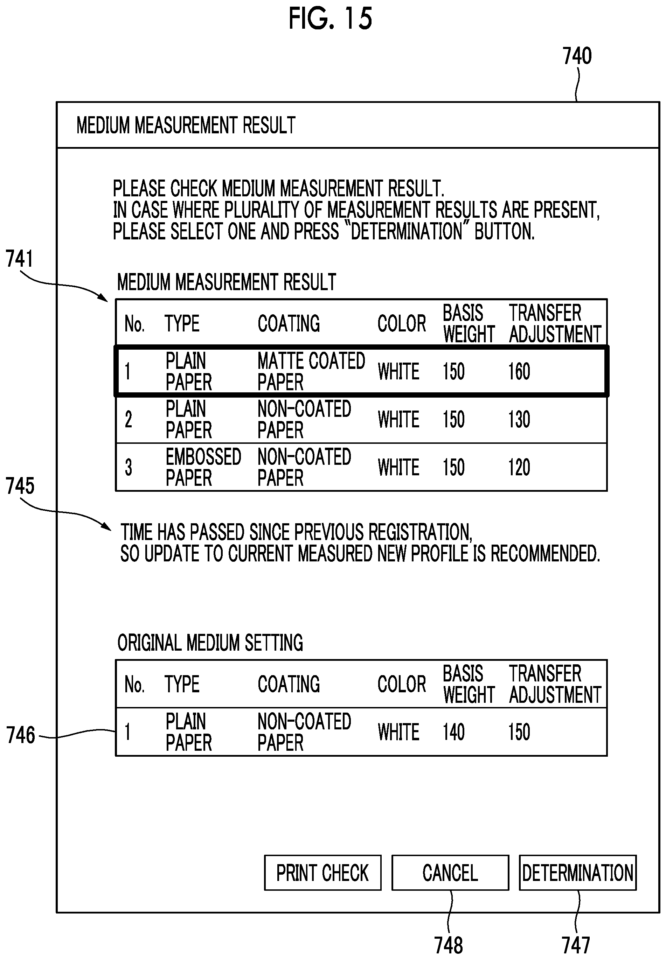

FIG. 15 is a diagram illustrating another example of the result screen 740 showing the measurement result of the medium measuring device 30.

FIG. 15 is an example of the image displayed in step S408 of FIG. 14.

On the result screen 740 illustrated in FIG. 15, a recommendation display 745 for recommending an update to a new medium information group is displayed. The recommendation display 745 is displayed as "Time has passed since the previous registration, so an update to the current measured new profile is recommended.". The recommendation display 745 is displayed in a case where a predetermined difference or more is present between the medium information group before the update and registration and the medium information group using the newly measured measurement values. The predetermined difference or more is, for example, an elapse of a predetermined time from the previous registration time or update time. Alternatively, the predetermined difference or more is, for example, a difference greater than or equal to a predetermined value in an item determined in advance among the items of the medium information group. Here, examples of the item determined in advance include the characteristic information that easily changes depending on the environment, and the printing parameter that easily changes depending on the environment. Here, the characteristic information that easily changes depending on the environment is, for example, the electrical resistance of the recording medium. The printing parameter that easily changes depending on the environment is, for example, a transfer temperature and the transfer adjustment value. For example, in a case where the recording medium in an open state from a sealed state is stored in a high-temperature and high-humidity environment, the electrical resistance of the recording medium is decreased, and the basis weight of the recording medium is increased after a certain period elapses immediately after opening, compared to the recording medium immediately after opening. Accordingly, in a case where the printing unit 12 of the printing apparatus 10 performs electrostatic transfer to the recording medium, for example, different transfer voltages are used, compared to the recording medium immediately after opening.

On the result screen 740 illustrated in FIG. 15, pre-change information 746 indicating the content of the medium information group before the change is displayed. In the illustrated example, "type", "coating", "color", "basis weight", and "transfer adjustment" are displayed in the pre-change information 746. The user selects the medium information group displayed in the measurement result display field 741 with reference to the pre-change information 746.

Items displayed in the pre-change information 746 are not particularly limited. For example, items having a predetermined difference or more may be preferentially displayed, compared to the medium information group in the measurement result display field 741. Alternatively, Items determined in advance by the user may be set to be displayed as the items displayed in the pre-change information 746.

On the result screen 740, a determination button 747 for updating the medium information group and a cancel button 748 for not updating the medium information group are displayed. Selection of the determination button 747 corresponds to the reception of the update instruction in step S409 of FIG. 14. Selection of the cancel button 748 corresponds to the reception of the cancel instruction in step S409 of FIG. 14.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Note)

(((1))) An information processing apparatus comprising:
   a processor configured to execute:
   a control of displaying pseudo progress status related to measurement of a recording medium by a medium measuring device regardless of actual progress of measurement of the recording medium by the medium measuring device; and
   a control of displaying, then, progress status in accordance with actual measurement status of the medium measuring device.
(((2))) The information processing apparatus according to (((1))),
   wherein in the display of the pseudo progress status, items determined based on a measurement value output from the medium measuring device are displayed in a highlighted manner in order.
(((3))) The information processing apparatus according to (((2))),
   wherein the items determined based on the measurement value are information related to a characteristic of the recording medium.
(((4))) The information processing apparatus according to (((2))) or (((3))),
   wherein the items determined based on the measurement value are items of control information for controlling image forming on the recording medium.
(((5))) The information processing apparatus according to any one of (((1))) to (((4))),
   wherein in the progress status displayed in accordance with the actual measurement status of the medium measuring device, a predetermined item is displayed in a highlighted manner in accordance with the actual measurement status after the pseudo progress status is displayed.
(((6))) The information processing apparatus according to (((5))),
   wherein in the highlighted display of the predetermined item, a pseudo display showing that processing related to the item is being performed is displayed.

According to (((1))), progress can be displayed while reducing occurrence of misunderstanding of a user.

According to (((2))), notification of information output from the medium measuring device can be provided.

According to (((3))), input work of the characteristic of the recording medium by the user can be easily performed.

According to (((4))), input work of a printing setting by the user can be easily performed.

According to (((5))), a display time can be reduced, compared to a case where the pseudo display is displayed regardless of an actual measurement time.

According to (((6))), the user can feel secure.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information group creation system
10: printing apparatus
30: medium measuring device
50: server apparatus
570: progress display control unit
730: progress screen
731: pseudo item
732: changing item
733: completion display

## Claims

1. An information processing apparatus comprising:
a processor configured to execute:
a control of displaying pseudo progress status related to measurement of a recording medium by a medium measuring device regardless of actual progress of measurement of the recording medium by the medium measuring device; and
a control of displaying, then, progress status in accordance with actual measurement status of the medium measuring device.

2. The information processing apparatus according to claim 1,
wherein in the display of the pseudo progress status, items determined based on a measurement value output from the medium measuring device are displayed in a highlighted manner in order.

3. The information processing apparatus according to claim 2,
wherein the items determined based on the measurement value are information related to a characteristic of the recording medium.

4. The information processing apparatus according to claim 2 or 3,
wherein the items determined based on the measurement value are items of control information for controlling image forming on the recording medium.

5. The information processing apparatus according to any one of claims 1 to 4,
wherein in the progress status displayed in accordance with the actual measurement status of the medium measuring device, a predetermined item is displayed in a highlighted manner in accordance with the actual measurement status after the pseudo progress status is displayed.

6. The information processing apparatus according to claim 5,
wherein in the highlighted display of the predetermined item, a pseudo display showing that processing related to the item is being performed is displayed.
